**Europäisches Patentamt**

**European Patent Office**

**Office européen des brevets**

(19)

(11) Veröffentlichungsnummer: **0 057 008**
A2

(12) # EUROPÄISCHE PATENTANMELDUNG

(21) Anmeldenummer: **82100513.9**

(51) Int. Cl.³: **G 01 D 5/22**

(22) Anmeldetag: **26.01.82**

(30) Priorität: 26.01.81 DE 3102439
08.08.81 DE 3131521

(43) Veröffentlichungstag der Anmeldung:
04.08.82 Patentblatt 82/31

(84) Benannte Vertragsstaaten:
AT BE CH DE FR GB IT LI LU NL SE

(71) Anmelder: **Contis electronische Controlinstrumente GmbH**
**Leitenstrasse 26**
**D-8192 Geretsried(DE)**

(72) Erfinder: **Koller, Roman**
**Berg 18**
**D-8196 Eurasburg(DE)**

(74) Vertreter: **Lehn, Werner, Dipl.-Ing. et al,**
**Hoffmann, Eitle & Partner Patentanwälte**
**Arabellastrasse 4 (Sternhaus)**
**D-8000 München 81(DE)**

(54) **Induktiver Weggeber.**

(57) Die Erfindung betrifft einen induktiven Weggeber mit zwei voneinander weitgehend entkoppelten magnetischen Kreisen, von denen zumindest in einem ein die jeweils elektromagnetisch wirksame Weglänge steuernder Kern das Induktivitätsverhältnis der magnetischen Kreise bestimmt und das Induktivitätsverhältnis vorzugsweise durch Messung des Frequenzverhältnisses zweier Oszillatorfrequenzen ermittelt wird, wobei die Induktivitäten (L1, L2) der magnetischen Kreise voneinander weitgehend entkoppelt jeweils in einen Oszillator (OSZ 1, OSZ 2) frequenzbestimmend geschaltet sind. Der erfindungsgemäße Geber tastet unmittelbar integrierend und der abzutastende Kern muß von der Spule nicht eng umschlossen sein. Der Geber ist daher besonders zur unmittelbaren Abtastung von Schwebekörpern geeignet.

Fig. 1

Fig. 2

Induktiver Weggeber

Die Erfindung bezieht sich auf einen induktiven Weggeber mit einer Luftspule und einem in die Luftspule eintauchenden Kern, dessen jeweils momentane Eintauchtiefe induktiv abgetastet werden soll.

Der Erfindung liegt die Aufgabe zugrunde, die momentane Eintauchtiefe eines in eine Luftspule eintauchenden Kerns präzise abzutasten, wobei die Anordnung des magnetischen Kreises einen sehr geringen Temperaturgang aufweisen soll.

Diese Aufgabe wird mit einem induktiven Weggeber mit einer Luftspule und einem in die Luftspule eintauchenden Kern, dessen jeweils momentane Eintauchtiefe induktiv abgetastet werden soll, erfindungsgemäß dadurch gelöst,

a) daß die Induktivität der Luftspule aus zwei elektromagnetischen voneinander entkoppelten Induktivitäten durch zwei Luftspulen, die jeweils so angeordnet sind, daß sie möglichst gleiche Umgebungstemperatur aufweisen, gebildet wird, und daß der Temperaturkoeffizient der ersten Spule möglichst dem Temperaturkoeffizienten der zweiten Spule angenähert ist und umgekehrt,

b) daß der in die Luftspule eintauchende Kern, dessen jeweils momentane Eintauchtiefe induktiv abgetastet werden soll, den Induktivitätswert der ersten Luftspule durch seine jeweils momentane Eintauchtiefe steuert, daß der Induktivitätswert der zweiten Luftspule durch einen zweiten Kern, dessen induktivitätsändernder Temperaturkoeffizient dem Temperaturkoeffizienten des Kerns der ersten Luftspule angenähert ist und umgekehrt, bestimmt wird, und daß der Kern der zweiten Luftspule in einer Eintauchtiefe, die für die zweite Luftspule den mittleren Induktivitätswert der gesteuerten ersten Luftspule ergibt, fest angeordnet ist oder daß der Kern der zweiten Luftspule in einer Eintauchtiefe, die für die zweite Luftspule den mittleren Induktivitätswert der gesteuerten ersten Luftspule als Arbeitspunkt ergibt, synchron zum Kern der ersten Luftspule gesteuert ist,

c) daß die Abtastung der jeweils momentanen Eintauchtiefe des in die erste Luftspule eintauchenden Kerns durch Messung des Induktivitätsverhältnisses von der ersten und zweiten Luftspule erfolgt.

Vorzugsweise sind die erste und zweite Spule jeweils in einen Oszillator geschaltet, wobei die Frequenz des ersten Oszillators vom jeweils momentanen Induktivitätswert der in den Oszillator geschalteten ersten Spule und die Frequenz des zweiten Oszillators vom jeweils momentanen Induktivitätswert der in den Oszillator geschalteten zweiten Spule bestimmt sind, und beide Oszillatorfrequenzen weitgehend voneinander entkoppelt sind, und das Frequenzverhältnis der beiden Oszillatoren als Anzeigewert für die jeweils momentane Eintauchtiefe des in die erste Luftspule eintauchenden ersten Kerns ist ausgekoppelt.

Ein gewünschter Funktionsverlauf des Abtastwertes kann in Abhängigkeit von der Eintauchtiefe des in die erste Luftspule eintauchenden ersten Kerns durch den Querschnittsverlauf des Kerns über seine Eintauchlänge hergestellt sein.

Vorzugsweise haben der Kern der ersten Luftspule und der Kern der zweiten Luftspule gleichen Querschnittsverlauf über ihre jeweils wirksame Eintauchlänge und beide Kerne weisen gleiche elektromagnetische Eigenschaften auf.

Als Kern kann ein Blechstreifen (z.B. Mu-Metall) verwendet werden.

Vorzugsweise wird eine gewünschte Nullpunkteinstellung des Anzeigewertes für eine vorgegebene Eintauchtiefe des in die Luftspule eintauchenden Kerns durch folgende Verfahrensschritte vorgenommen:

a) Feststellen des Anzeigewertes für die Eintauchtiefe des in die Luftspule eintauchenden Kerns, die den Anzeigewert Null aufweisen soll,

b) Austasten der höheren Frequenz um eine Impulszahl, die dem Anzeigewert der Eintauchtiefe des in die Luftspule eintauchenden Kerns, die den Anzeigewert Null aufweisen soll, entspricht, während der Dauer einer oder des Vielfachen einer Periode der niedrigeren Frequenz, und

c) Rücksetzen des Zählvorganges für die Zählung der auszutastenden Impulszahl zu Beginn der Dauer einer oder des Vielfachen einer Periode der niedrigeren Frequenz.

Alternativ wird eine gewünschte Nullpunkteinstellung des Anzeigewertes für eine vorgegebene Eintauchtiefe des in die Luftspule eintauchenden Kerns durch folgende Verfahrensschritte vorgenommen:

a) Feststellen des Anzeigewertes für die Eintauchtiefe des in die Luftspule eintauchenden Kerns, die den Anzeigewert Null aufweisen soll,

b) Austasten der Dauer einer oder des Vielfachen einer Periode der niedrigeren Frequenz um die Dauer der Impulszahl der höheren Frequenz, die dem Anzeigewert der Eintauchtiefe des in die Luftspule eintauchenden Kerns, die den Anzeigewert Null aufweisen soll, entspricht, und

c) Rücksetzen des Zählvorganges für die Zählung der Dauer der dem Anzeigewert Null entsprechenden Impulszahl zu Beginn der Dauer einer oder des Vielfachen einer Periode der niedrigeren Frequenz.

Vorzugsweise besteht eine Luftspule jeweils aus mehreren Luftspulen, die geometrisch zu einer einzigen Spule zusammengefaßt sind, und die Eintauchtiefe eines in die Luftspulen eintauchenden Kerns wird festgestellt durch aufeinanderfolgendes oder paralleles Abtasten der einzelnen induktiven Kreise.

Die eine geometrische Einheit bildenden Luftspulen können aus einer einzigen mit Anzapfungen versehenen Luftspule hergestellt sein, und die Spulenenden können einer Multiplexeinrichtung zugeleitet sein, mit der jede Spule, d.h. jeweils zwei aufeinanderfolgende Anzapfungen der Gesamtspule, auf einen jeweils zwei adressierten Spulenenden gemeinsamen Leitungsbus, bestehend aus zwei Schienen, geschaltet werden kann.

Das Prinzip der Erfindung hat gegenüber dem Stand der Technik üblichen Prinzip der Differentialdrossel den Vorteil, daß erstens die Spule den Kern nicht eng umschließen muß und zum zweiten der Geber unmittelbar integrierend ist, wodurch z.B. eine gegenüber dem Stand der Technik wesentlich verbesserte Längenabtastung eines schwebenden Kerns (z.B. Schwebekörperabtastung) erzielt werden kann.

Eine weitere Aufgabe der Erfindung liegt darin, das Prinzip so zu erweitern, daß eine Vorlinearisierung der Geberkurve bei Verwendung von Kernen vorgegebener Bauform mög- lich ist, wodurch sich Auflösung und Temperaturgang für die Abtastung von Kernen vorgegebener Bauform wesentlich verbessern. Der Weggeber soll dabei bezüglich Genauigkeit und hierfür erforderlichen Aufwand technisch weiter verbessert werden.

Diese weitere Aufgabe wird mit einem induktiven Weggeber, dessen Induktivität aus zwei voneinander weitgehend entkoppelten magnetischen Kreisen besteht, deren Induktivitätsverhältnis zueinander als Geberwert durch die jeweils elektromagnetisch wirksame Weglänge eines die Feldstärke zumindest eines magnetischen Kreises steuernden Kerns bestimmt ist und die Abtastung der jeweils elektromagnetisch wirksamen Weglänge des Kerns durch Messung des Induktivitätsverhältnisses der Induktivitäten des ersten und zweiten magnetischen Kreises erfolgt, wobei die Messung des Induktivitätsverhältnisses weitgehend entkoppelt voneinander (keine Koppelung der magnetischen Kreise) erfolgt, erfindungsgemäß dadurch gelöst,

a) daß zusätzlich zum ersten magnetischen Kreis, dessen Induktivitätswert durch einen die jeweils elektromagnetisch wirksame Weglänge des Kreises steuernden Kern als Induktivitätsmomentanwert des Gebers bestimmt ist, ein weiterer Kern, dessen Steuerweg mechanisch oder elektromechanisch mit dem Steuerweg des ersten Kerns gekoppelt ist, den Induktivitätswert des zweiten elektromagnetischen Kreises durch Steuerung seiner jeweils elektromagnetischen Weglänge als Induktivitätsmomentanwert des Gebers bestimmt, wobei die beiden elektromagnetischen Kreise weitgehend voneinander entkoppelt sind, und

b) daß die beiden, jeweils einen elektromagnetischen Kreis steuernden Kerne mechanisch oder elektromechanisch so miteinander gekoppelt sind, daß für eine differentielle Zunahme der elektromagnetisch wirksamen Weglänge (Abnahme der Feldstärke) des einen elektromagnetischen Kreises eine differentielle Abnahme der elektromagnetisch wirksamen Weglänge (Zunahme der Feldstärke) des zweiten elektromagnetischen Kreises erfolgt.

Ein derartiger Weggeber ist vorzugsweise derart aufgebaut,

a) daß die elektromagnetischen Kreise jeweils als Spulen mit eintauchendem Kern, deren Hubweg durch ein mechanisches Verbindungsstück gekoppelt ist, ausgefüllt sind, wobei das Verbindungsstück eine elektromagnetische Koppelung der beiden elektromagnetischen Kreise weitgehend vermeidet, und

b) daß Spulen und Kerne der voneinander weitgehend entkoppelten elektromagnetischen Kreise zueinander so angeordnet sind, daß für eine kerneintauchende Phase des einen Kreises eine kernaustauchende Phase des anderen Kreises bewirkt ist und umgekehrt.

Vorzugsweise sind die beiden Kerne längs einer gemeinsamen Achse angeordnet, wobei die beiden Kerne durch ein die beiden elektromagnetischen Kreise weitgehend entkoppelndes Mittelstück, das ebenfalls längs der gemeinsamen Achse angeordnet ist, verbunden sind und wobei ein Teil der Kerne jeweils von einer Spule umschlossen ist.

Für jeden magnetischen Kreis kann jeweils die Spulenhöhe bzw. -länge kürzer als die Länge des eintauchenden Kerns sein.

Die Kerne können jeweils aus elektromagnetisch leitendem Material (z.B. Mu-Metall, HF-Eisen oder hoch Weicheisen, etc.) und das Verbindungsstück aus elektromagnetisch neutralem Material (z.B. Messing oder Kunststoff, Glas, etc.) gefertigt sein.

Im folgenden wird die Erfindung anhand der Ausführungsbeispiele darstellenden Zeichnungen näher erläutert. In den Zeichnungen zeigen

Fig. 1        einen Querschnitt eines induktiven Weggebers gemäß der Erfindung,

Fig. 2        ein Schaltbild mit zwei Oszillatoren,

Fig. 3 und 4  Schaltbilder elektronischer Nullpunkteinstellung bei Verwendung einer Schaltung
              nach Fig. 2,

Fig. 5        eine Anordnung, bei der das erfindungsgemäße Prinzip für eine Spule angewendet
              wird,

Fig. 6 und 7  Querschnitte eines induktiven Weggebers
              gemäß der Erfindung unter Verwendung einer
              Schwebekörperabtastung, und

Fig. 8        einen mit der Erfindung zu verwendenden
              Kern.

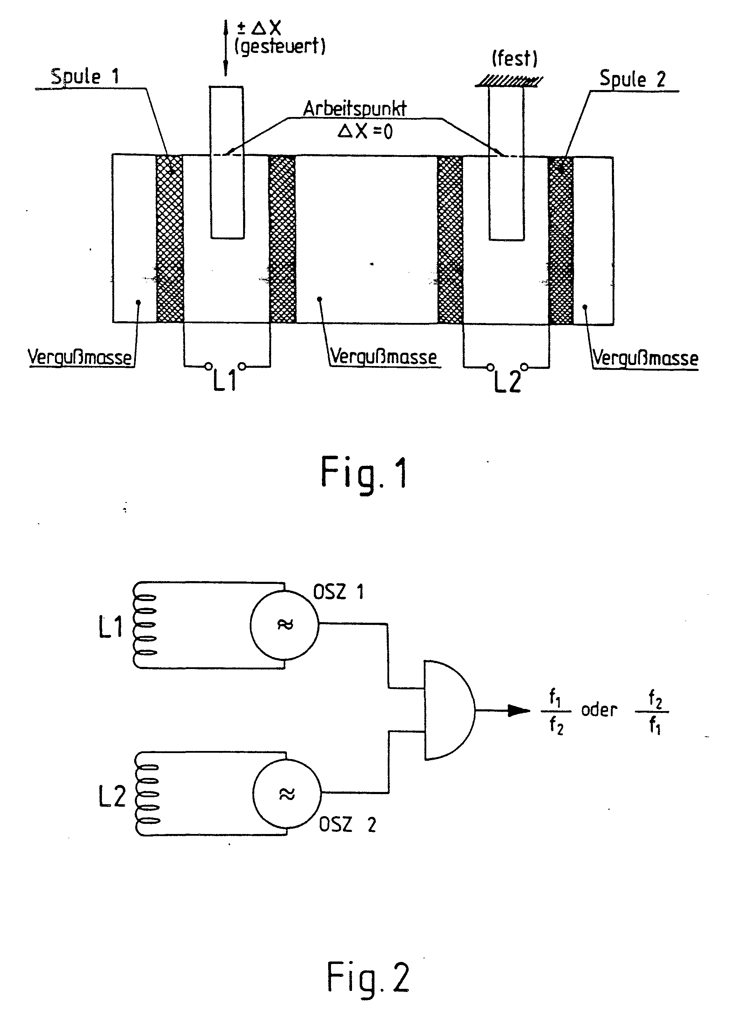

In Fig. 1 ist das Prinzip der Erfindung figürlich dargestellt. Zwei magnetisch voneinander entkoppelte Luftspulen (Spule 1 mit L1 bezeichnet, Spule 2 mit L2 bezeichnet), die identisch gefertigt sind, werden z.B. in einem gemeinsamen Block vergossen, wodurch sie gleichen Temperaturgang aufweisen.

L1 wird durch die Eintauchtiefe ($\Delta$x) ihres Kerns gesteuert, wobei dessen Eintauchtiefe jeweils abgetastet werden soll. L2 ist durch einen Kern, der mit dem der Spule 1 exemplarisch übereinstimmt, festgelegt, wobei der Arbeitspunkt von L2 (Arbeitspunkt betreffend Änderung der Induktivität durch temperaturbedingte Verformung der Spule) gleich dem Arbeitspunkt von L1 für $\Delta$x = 0 festgelegt ist. Für nichtlineare Funktionen kann der Kern von L2 auf den jeweils symmetrischen Tangentialpunkt der Näherungsgeraden des entsprechenden Mittelwertes von L1 nachgesteuert werden.

Als Kern für L1 und L2 genügt im Prinzip ein einfaches Mu-Metallplättchen, dessen Querschnittsverlauf längs seiner Eintauchlänge jeden beliebigen Funktionsverlauf herstellen kann.

Für die Auswertung der Eintauchtiefe des Kerns von L1 ist eine Differenzmessung von $\frac{L1}{L2}$ oder $\frac{L2}{L1}$ erforderlich. Einen einfachen Schaltungsvorschlag hierfür zeigt Fig. 2. L1 und L2 sind als Resonanzspulen in jeweils einen Oszillator OSZ 1 und OSZ 2 geschaltet, deren Frequenzverhältnis als Anzeigewert genommen wird.

Zu beachten ist, daß eine Kompensation des Temperaturganges der Spulenanordnung bei Verwendung des in Fig. 2 gezeigten Schaltungsvorschlages nur möglich ist, wenn beide Oszillatoren OSZ 1 und OSZ 2 auch tatsächlich auf der Resonanzfrequenz schwingen, da sonst der Kupferfehler eine Nichtlinearität der Anordnung verursacht. Das gleiche gilt für die Temperaturabhängigkeit des Phasenganges der gesamten Schwingschaltung.

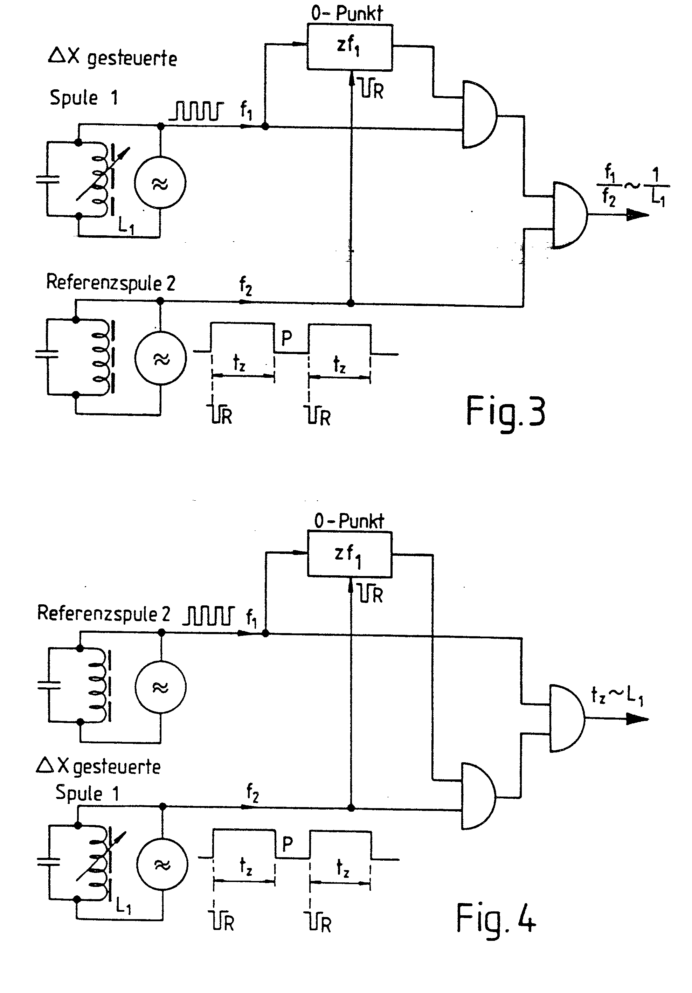

Fig. 3 und Fig. 4 zeigen Schaltungen für eine elektronische Nullpunkteinstellung bei Verwendung einer Schaltung nach Fig. 2.

In der in Fig. 3 gezeigten Schaltung wird die durch die Induktivität der gesteuerten Spule L1 erzeugte Impulszahl für eine Periode bzw. ein Vielfaches der Periode der von L2 erzeugten Impulszahl gemessen. Das Anzeigeergebnis ist daher proportional dem Wert $\frac{1}{L1}$ , da die Frequenzänderung mit $\frac{1}{L1}$ und die Induktivitätsänderung mit $L1^2$ in die Anordnung eingeht. Als Anzeigewert wird also $f_1$ innerhalb $t_z$ von $f_2$ gemessen, wobei $t_z \sim \frac{1}{f_2}$ . Mit dem Teiler $zf_1$ wird diejenige Zahl von Impulsen von $f_1$ unterdrückt, die im gewünschten Nullpunkt mit einer Anordnung nach Fig. 2 (ohne Impulsunterdrückung) gemessen wird. Die Rückstellung von $zf_1$ erfolgt jeweils zu Beginn der Meßzeit $t_z$ (durch $\sqcup$ R ).

In der in Fig. 4 gezeigten Schaltung wird die durch die Induktivität der gesteuerten Spule L1 erzeugte Impulsdauer durch die von L2 erzeugte Impulszahl gemessen. Das Anzeigeergebnis ist daher proportional dem Wert L1, da die Zeitänderung mit $\sqrt{L1}$ und die Induktivitätsänderung mit $L1^2$ in die Anordnung eingeht. Als Anzeigewert wird also $t_z$ durch die Impulszal von $f_1$ gemessen, wobei $t_z \sim \frac{1}{f_2}$ . Mit dem Teiler $zf_1$ wird dasjenige Zeitintervall der Meßzeit $t_z$ unterdrückt, in dem die Impulszahlen $f_1$ , mit der im gewünschten Nullpunkt mit einer Anordnung nach Fig. 2 gemessenen Impulszahl übereinstimmt.

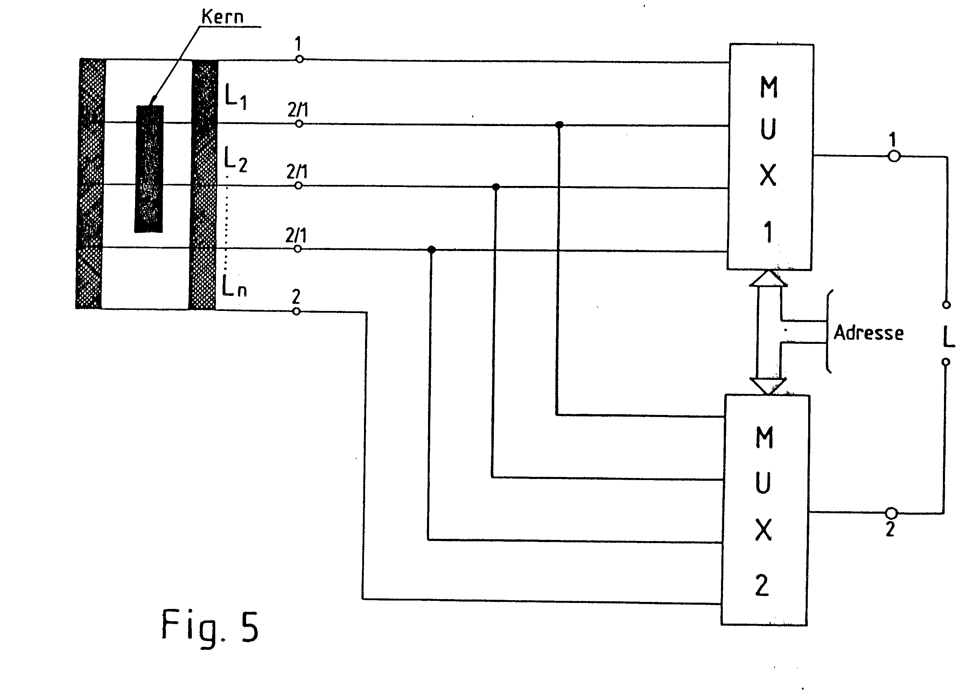

Fig. 5 zeigt eine Anordnung, bei der das erfindungsgemäße Prinzip für eine Spule angewendet wird, deren Länge wesentlich die Länge des verwendeten Kerns überschreitet.

Zu diesem Zweck sind mehrere Spulen hintereinandergeschaltet ($L_1$ ... $L_n$), wobei die Länge einer Spule jeweils kürzer als die Kernlänge ist und die Spulen sequentiell abgefragt werden. Für die Auswertung stehen dann Eintauchlänge des Kerns mit zugehöriger Spulenadresse zur Verfügung. Für das erfindungsgemäße Prinzip ist die in Fig. 5 gezeigte Anordnung zweimal vorhanden.

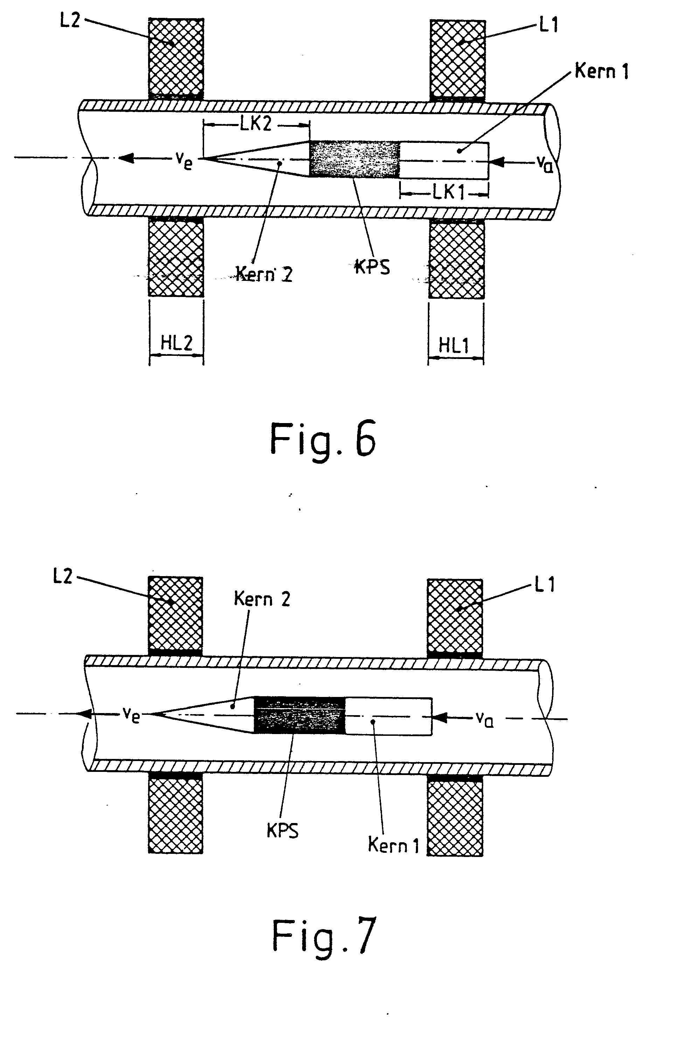

In Fig. 6 und 7 ist die Erfindung an Anwendungsbeispielen einer Schwebekörperabtastung, wie sie beispielsweise auch für Durchflußmesser zur Anwendung kommen, erläutert. Sämtliche Bauelemente, die die Erfindung nicht betreffen und dem Durchschnittsfachmann bekannt sind, sind der Übersicht halber nicht in die Beschreibung einbezogen.

Das Induktivitätsverhältnis $\frac{L1}{L2}$ wird durch Frequenzverhältnismessung erhalten. Verwendet man Resonanzoszillatoren, dann ist das Frequenzverhältnis $\sqrt{\frac{L1}{L2}}$ umgekehrt proportional.

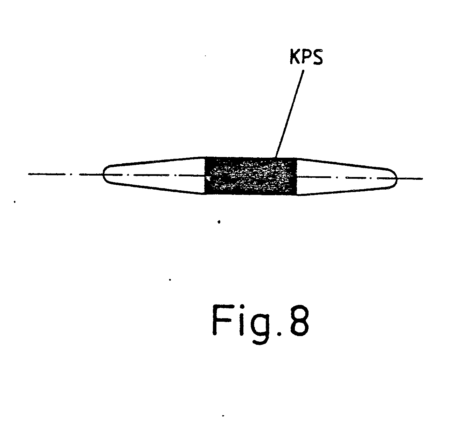

Wie in Fig. 1 und Fig. 2 gezeigt ist, wird die z.B. im Nenner liegende Induktivität L2 ebenfalls durch die gleiche Kernbewegung gesteuert, wie z.B. L1, kann z.B. die differentielle Änderung von L1 entgegengesetzt zur differentiellen Änderung von L2 gemacht werden (ein besonders geeigneter Kern wäre hierfür z.B. ein Kern nach Fig. 8); dann wäre die differentielle Änderung proportional $\left(\frac{L1}{L2}\right)^2$ d.h. $\frac{f_2}{f_1}$, dem Frequenzverhältnis umgekehrt proportional. Außerdem kann eine eventuelle Nichtlinearität des Zählerwertes (L1) durch entsprechende gleiche Nichtlinearität des Nennerwertes (L2) ausgeglichen werden, so daß für eine endgültige Linearisierung wesentlich weniger Speicherplätze erforderlich sind. Außerdem erreicht man dadurch bessere Endgenauigkeit der linearisierten Geberkurve und schnellere Meßzeiten bei Verwendung von Niederfrequenzkernen.

Patentansprüche:

1. Induktiver Weggeber mit einer Luftspule und einem in die Luftspule eintauchenden Kern, dessen jeweils momentane Eintauchtiefe induktiv abgetastet werden soll, dadurch gekennzeichnet,

   a) daß die Induktivität der Luftspule aus zwei elektromagnetisch voneinander entkoppelten Induktivitäten durch zwei Luftspulen, die jeweils so angeordnet sind, daß sie möglichst gleiche Umgebungstemperatur aufweisen, gebildet wird, und daß der Temperaturkoeffizient der ersten Spule möglichst dem Temperaturkoeffizienten der zweiten Spule angenähert ist und umgekehrt,

   b) daß der in die Luftspule eintauchende Kern, dessen jeweils momentane Eintauchtiefe induktiv abgetastet werden soll, den Induktivitätswert der ersten Luftspule durch seine jeweils momentane Eintauchtiefe steuert, daß der Induktivitätswert der zweiten Luftspule durch einen zweiten Kern, dessen induktivitätsändernder Temperaturkoeffizient dem Temperaturkoeffizienten des Kerns der ersten Luftspule angenähert ist und umgekehrt, bestimmt wird, und daß der Kern der zweiten Luftspule in einer Eintauchtiefe, die für die zweite Luftspule den mittleren Induktivitätswert der gesteuerten ersten Luftspule ergibt, fest angeordnet ist oder daß der Kern der zweiten Luftspule in einer Eintauchtiefe, die für die zweite Luftspule den mittleren Induktivitätswert der gesteuerten ersten Luftspule als Arbeitspunkt ergibt, synchron zum Kern der ersten Luftspule gesteuert ist,

c) daß die Abtastung der jeweils momentanen Eintauchtiefe des in die erste Luftspule eintauchenden Kerns durch Messung des Induktivitätsverhältnisses von der ersten und zweiten Luftspule erfolgt.

2. Induktiver Weggeber nach Anspruch 1, dadurch gekennzeichnet, daß erste und zweite Spule jeweils in einen Oszillator geschaltet sind, wobei die Frequenz des ersten Oszillators vom jeweils momentanen Induktivitätswert der in den Oszillator geschalteten ersten Spule und die Frequenz des zweiten Oszillators vom jeweils momentanen Induktivitätswert der in den Oszillator geschalteten zweiten Spule bestimmt sind, und beide Oszillatorfrequenzen weitgehend voneinander entkoppelt sind, und daß das Frequenzverhältnis der beiden Oszillatoren als Anzeigewert für die jeweils momentane Eintauchtiefe des in die Luftspule (erste Luftspule) eintauchenden ersten Kerns ausgekoppelt ist.

3. Induktiver Weggeber nach Anspruch 1 oder 2, dadurch gekennzeichnet, daß ein gewünschter Funktionsverlauf des Abtastwertes in Abhängigkeit von der Eintauchtiefe des in die erste Luftspule eintauchenden ersten Kerns durch den Querschnittsverlauf des Kerns über seine Eintauchlänge hergestellt ist.

4. Induktiver Weggeber nach einem der Ansprüche 1 bis 3, dadurch gekennzeichnet, daß der Kern der ersten Luftspule und der Kern der zweiten Luftspule gleichen Querschnittsverlauf über ihre jeweils wirksame Eintauchlänge haben und daß beide Kerne gleiche elektromagnetische Eigenschaften aufweisen.

5. Induktiver Weggeber nach einem der Ansprüche 1 bis 4, dadurch gekennzeichnet, daß als Kern ein Blechstreifen (z.B. Mu-Metall) verwendet wird.

6. Induktiver Weggeber nach Anspruch 2, dadurch gekennzeichnet, daß eine gewünschte Nullpunkteinstellung des Anzeigewertes für eine vorgegebene Eintauchtiefe des in die Luftspule eintauchenden Kerns durch folgende Verfahrensschritte vorgenommen wird:

a) Feststellen des Anzeigewertes für die Eintauchtiefe des in die Luftspule eintauchenden Kerns, die den Anzeigewert Null aufweisen soll,

b) Austasten der höheren Frequenz um eine Impulszahl, die dem Anzeigewert der Eintauchtiefe des in die Luftspule eintauchenden Kerns, die den Anzeigewert Null aufweisen soll, entspricht, während der Dauer einer oder des Vielfachen einer Periode der niedrigeren Frequenz, und

c) Rücksetzen des Zählvorganges für die Zählung der auszutastenden Impulszahl zu Beginn der Dauer einer oder des Vielfachen einer Periode der niedrigeren Frequenz (Fig. 3).

7. Induktiver Weggeber nach Anspruch 2, dadurch gekennzeichnet, daß eine gewünschte Nullpunkteinstellung des Anzeigewertes für eine vorgegebene Eintauchtiefe des in die Luftspule eintauchenden Kerns durch folgende Verfahrensschritte vorgenommen ist:

a) Feststellen des Anzeigewertes für die Eintauchtiefe des in die Luftspule eintauchenden Kerns, die den Anzeigewert Null aufweisen soll,

b) Austasten der Dauer einer oder des Vielfachen einer Periode der niedrigeren Frequenz um die Dauer der Impulszahl der höheren Frequenz die dem Anzeigewert der Eintauchtiefe des in die Luftspule eintauchenden Kerns, die den Anzeigewert Null aufweisen soll, entspricht, und

c) Rücksetzen des Zählvorganges für die Zählung der Dauer der dem Anzeigewert Null entsprechenden Impulszahl zu Beginn der Dauer einer oder des Vielfachen einer Periode der niedrigeren Frequenz (Fig. 4).

8. Induktiver Weggeber nach einem der Ansprüche 1 bis 7, dadurch gekennzeichnet, daß eine Luftspule jeweils aus mehreren Luftspulen, die geometrisch zu einer einzigen Spule zusammengefaßt sind (Fig. 5), besteht, und daß die Eintauchtiefe eines in die Luftspulen eintauchenden Kerns festgestellt wird durch aufeinanderfolgendes oder paralleles Abtasten der einzelnen induktiven Kreise.

9. Induktiver Weggeber nach Anspruch 8, dadurch gekennzeichnet, daß die eine geometrische Einheit bildenden Luftspulen aus einer einzigen mit Anzapfungen versehenen Luftspule hergestellt sind, und daß die Spulenenden einer Multiplexeinrichtung (Fig. 5A) zugeleitet sind, mit der jede Spule, d.h. jeweils zwei aufeinanderfolgende Anzapfungen der Gesamtspule ($L_1$ ... $L_n$ in Fig. 5) auf einen jeweils zwei adressierten Spulenenden gemeinsamen Leitungsbus, bestehend aus zwei Schienen, geschaltet werden kann.

10. Induktiver Weggeber, dessen Induktivität aus zwei voneinander weitgehend entkoppelten magnetischen Kreisen besteht, deren Induktivitätsverhältnis zueinander als Geberwert durch die jeweils elektromagnetisch wirksame Weglänge eines die Feldstärke zumindest eines magnetischen Kreises steuernden Kerns bestimmt ist, und die Abtastung der jeweils elektromagnetisch wirksamen Weglänge des Kerns durch Messung des Induktivitätsverhältnisses der Induktivitäten des ersten und zweiten magnetischen Kreises erfolgt, wobei die Messung des Induktivitätsverhältnisses weitgehend entkoppelt voneinander (keine Koppelung der magnetischen Kreise) erfolgt, nach Anspruch 1, dadurch gekennzeichnet,

a) daß zusätzlich zum ersten magnetischen Kreis, dessen Induktivitätswert (L1 in Fig. 6) durch einen die jeweils elektromagnetisch wirksame Weglänge des Kreises steuernden Kern als Induktivitätsmomentanwert des Gebers bestimmt ist, ein weiterer Kern (Kern 2 in Fig. 6), dessen Steuerweg mechanisch (Koppelstück KPS in Fig. 6 und 7) oder elektromechanisch mit dem Steuerweg des ersten Kerns (Kern 1 in Fig. 6, Fig. 7) gekoppelt ist, den Induktivitätswert des zweiten elektromagnetischen Kreises durch Steuerung seiner jeweils elektromagnetischen Weglänge als Induktivitätsmomentanwert des Gebers bestimmt, wobei die beiden elektromagnetischen Kreise weitgehend voneinander entkoppelt sind, und

b) daß die beiden, jeweils einen elektromagnetischen Kreis steuernden Kerne mechanisch oder elektromechanisch so miteinander gekoppelt sind, daß für eine differentielle Zunahme der elektromagnetisch wirksamen Weglänge (Abnahme der Feldstärke) des einen elektromagnetischen Kreises eine differenzielle Abnahme der elektromagnetisch wirksamen Weglänge (Zunahme der Feldstärke) des zweiten elektromagnetischen Kreises erfolgt.

11. Induktiver Weggeber nach Anspruch 10, dadurch gekennzeichnet,

a) daß die elektromagnetischen Kreise jeweils als Spulen mit eintauchendem Kern, deren Hubweg durch ein mechanisches Verbindungsstück (KPS in Fig. 6, Fig. 7) gekoppelt ist, ausgeführt sind, wobei das Verbindungsstück eine elektromagnetische Koppelung der beiden elektromagnetischen Kreise weitgehend vermeidet, und

b) daß Spulen und Kerne der voneinander weitgehend entkoppelten elektromagnetischen Kreise zueinander so angeordnet sind, daß für eine kerneintauchende Phase ($V_e$ in Fi.g 6) des einen Kreises eine kernaustauchende Phase ($V_a$ in Fig. 6) des anderen Kreises bewirkt ist und umgekehrt.

12. Induktiver Weggeber nach Anspruch 10 oder 11, dadurch gekennzeichnet, daß die beiden Kerne längs einer gemeinsamen Achse angeordnet sind, wobei die beiden Kerne durch ein die beiden elektromagnetischen Kreise weitgehend entkoppelndes Mittelstück (KPS in Fig. 6, Fig. 7), das ebenfalls längs der gemeinsamen Achse angeordnet ist, verbunden sind und daß ein Teil der Kerne jeweils von einer Spule umschlossen ist.

13. Induktiver Weggeber nach einem der Ansprüche 10 bis 12, dadurch gekennzeichnet, daß für jeden magnetischen Kreis jeweils die Spulenhöhe bzw. -länge (HL1, HL2 in Fig. 6) kürzer als die Länge des eintauchenden Kerns (LK1, LK2) ist.

14. Induktiver Weggeber nach einem der Ansprüche 10 bis 13, dadurch gekennzeichnet, daß die Kerne jeweils aus elektromagnetisch leitendem Material (z.B. Mu-Metall, HF-Eisen oder hoch Weicheisen, etc,) und das Verbindungsstück aus elektromagnetisch neutralem Material (z.B. Messing oder Kunststoff, Glas, etc.) gefertigt sind.

Fig. 1

Fig. 2

0057008

Fig. 3

Fig. 4

Fig. 5

Fig. 6

Fig. 7

KPS

Fig.8